Europäisches Patentamt

European Patent Office

Office européen des brevets

(11) Numéro de publication: **0 222 676**
**A1**

## (12) DEMANDE DE BREVET EUROPEEN

(21) Numéro de dépôt: 86440083.3

(22) Date de dépôt: 02.10.86

(51) Int. Cl.⁴: **A 23 C 19/076**

(30) Priorité: 15.10.85 FR 8515382

(43) Date de publication de la demande:
20.05.87 Bulletin 87/21

(84) Etats contractants désignés:
AT BE CH DE ES GB GR IT LI LU NL SE

(71) Demandeur: UNICOOLAIT - UNION DE COOPERATIVES LAITIERES DE LORRAINEE ET D'ALSACE - UNION DE COOPERATIVES AGRICOLES Société Civile dite:
Chemin d'Imling
F-57401 Sarrebourg (FR)

(72) Inventeur: Bricka, Frédéric
18, rue du Donon
F-57400 Sarrebourg (FR)

Bourdin, Michel
Cité Unicoolait
F-57400 Sarrebourg (FR)

(74) Mandataire: Aubertin, François
Cabinet Lepage & Aubertin Innovations et Prestations 4, rue de Haguenau
F-67000 Strasbourg (FR)

(54) Produit alimentaire à faible teneur calorique.

(57) Un produit alimentaire du type salade de crudités à faible teneur calorique comprenant du fromage blanc et au moins un légume cru et/ou un produit de charcuterie dont le pourcentage en fromage blanc est de 30 à 60 % et la pourcentage en légume cru et/ou en produit de charcuterie est de 70 à 40 %.

EP 0 222 676 A1

# Description

Produit alimentaire à faible teneur calorique.

L'invention concerne un produit alimentaire du type salade de crudités à faible teneur calorique comprenant du fromage blanc et au moins un légume cru et/ou un produit de charcuterie, l'ensemble étant éventuellement épicé.

On connaît déjà une grande variété de salades de crudités, composées essentiellement d'un mélange de légumes et de crudités sous des formes ou des préparations diverses, ce mélange étant assaisonné habituellement avec des sauces telles que mayonnaise, vinaigrette ou similaire.

Ces types de salades traditionnelles ont, bien entendu, l'avantage d'être relativement riches en vitamines et en fibres végétales, mais elles ont aussi l'inconvénient d'être trop riches en calories du fait de la présence des assaisonnements à base d'huile, et par suite, elles sont quelquefois difficiles à transformer par l'organisme, tout en étant d'une valeur diététique médiocre.

Pair ailleurs, on connaît des encyclopédies culinaires ou diététiques dans lesquelles on suggère la préparation d'aliments de faible teneur en calories en procédant à un mélange d'un fromage blanc avec des légumes, de préférence crus, et/ou des fruits.

Cependant, les différentes proportions sont laissées au choix du consommateur et, de ce fait, l'obtention du produit alimentaire est très empirique et, forcément, variable. De ce fait, le produit alimentaire en question ne peut être fabriqué industriellement, ni commercialisé.

La présente invention a pour but de remédier à ces inconvénients. L'invention, telle qu'elle est caractérisée dans les revendications, résout le problème consistant à créer un produit alimentaire du type salade de crudités à faible teneur calorique comprenant du fromage blanc et au moins un légume cru et/ou un produit de charcuterie, l'ensemble étant éventuellement épicé dont le pourcentage en fromage blanc est de 30 à 60 % et le pourcentage en légume cru et/ou en produit de charcuterie est de 70 à 40 %.

Les avantages obtenus grâce à cette invention consistent essentiellement en ce que l'on propose au consommateur un produit alimentaire réalisé industriellement dont la composition d'un même mode de préparation est constante, et, plus particulièrement, un aliment qui, par un choix judicieux des pourcentages des composants, devient un produit alimentaire bien plus équilibré, riche en vitamines mais à faible teneur calorique. En effet, dans le cadre des recettes proposées, en laissant la possibilité au consommateur de choisir le pourcentage des différents produits dudit mélange, on risque que le produit alimentaire ne soit plus équilibré et provoque certains malaises digestifs. Ainsi, la composition n'est plus arbitraire mais elle est scientifiquement déterminée.

De ce fait, il est possible de conférer au produit alimentaire selon l'invention un caractère frais et onctueux, tout en lui apportant non seulement les qualités nutritives et diététiques du lait mais, également, de maintenir, d'une manière constante, sa teneur calorique à un faible niveau.

Selon l'invention, le produit alimentaire est une salade de crudités à base de légumes ou d'un produit de charcuterie que l'on assaisonne à l'aide d'une certaine quantité de fromage blanc.

Ainsi, ce produit alimentaire peut être constitué de 50 % de fromage blanc, de 18 % de céleris en branches, de 20 % de céleris-raves, de 9 % de carottes, d'oignons, de jus de citron, d'aromates, de sel, de poivre et de stabilisants usuels (E410 et E412) dans une proportion totale de 3 %.

Selon un autre mode de préparation, ce produit alimentaire peut être constitué de 54 % de fromage blanc, de 28 % de cervelas, de 17 % de cornichons, et encore, de sel, de poivre, d'aromates, de moutarde et de stabilisants dans une proportion totale de 1 %.

Une autre composition originale du produit alimentaire selon l'invention se constitue de 50 % de fromage blanc, de 19 % de concombres, de 10 % de choux-fleurs, de 17 % de haricots verts, de vinaigre de vin et de poivre dans une proportion totale de 2 %. Par ailleurs, ce produit ali mentaire du type salade peut également être composé par 39 % de fromage blanc, 20 % de coeurs de palmier, 20 % de maïs, 20 % de poivrons, du sel et du jus de citron à raison de 1 %.

Enfin, une dernière composition avantageuse peut être proposée, tout en sachant qu'un grand nombre de dosages et de compositions restent posssible dans le cadre de l'invention : il s'agit d'un mélange de 55 % de fromage blanc, de 18 % de carottes, de 5 % de brocolis, de 20 % de concombres, et de 2 % d'un mélange constitué de sel, de vinaigre, de poivre, d'aromates et de stabilisants.

L'ensemble de ces compositions, nullement limitatives, font aisément comprendre qu'il s'agit d'un produit alimentaire extrêmement sain et riche en vitamines, parfaitement adapté entre-autres à des alimentations surveillées : régime alimentaire pour personnes âgées, malades, obèses, enfants, tout en étant, bien évidemment, un aliment profitable à l'adulte en bonne santé.

Il est clair que, dans certains cas, les légumes utilisés pourront être cuits, mais pour un plus grand agrément de consommation, le produit alimentaire selon l'invention comporte les légumes précités sous forme crue.

## Revendications

1. Produit alimentaire du type salade de crudités à faible teneur calorique comprenant du fromage blanc et au moins un légume cru et/ou un produit de charcuterie, l'ensemble étant, éventuellement, épicé, caractérisé en ce qu'il comporte un pourcentage en fromage blanc de 30 à 60 % et un pourcentage en légume cru et/ou en produit de charcuterie de 70 à 40 %.

2. Produit alimentaire selon la revendication 1, caractérisé par le fait qu'il comporte 50 % de fromage blanc, 18 % de céleris en branches, 20% de céleris-rave, 9 % de carottes, des oignons, du jus de citron, des aromates, du sel, du poivre et des stabilisants dans une proportion totale de 3 %.

3. Produit alimentaire selon la revendication 1, caractérisé par le fait qu'il comporte 54 % de fromage blanc, 28 % de cervelas, 17 % de cornichons, du sel, du poivre, des aromates, de la moutarde et des stabilisants dans une proportion totale de 1 %.

4. Produit alimentaire selon la revendication 1, caractérisé par le fait qu'il comporte 52 % de fromage blanc, 19 % de concombres, 10 % de choux-fleurs, 17 % de haricots verts, du vinaigre de vin et du poivre dans une proportion totale de 2 %.

5. Produit alimentaire selon la revendication 1, caractérisé par le fait qu'il comporte 39 % de fromage blanc, 20 % de coeurs de palmier, 20 % de maïs, 20 % de poivron, du sel et du jus de citron à raison de 1%.

6. Produit alimentaire selon la revendication 1, caractérisé par le fait qu'il se compose de 55 % de fromage blanc, de 18 % de carottes, de 5 % de brocolis, de 20 % de concombres, de sel, de vinaigre, de poivre, d'aromates et de stabilisants dans une proportion cumulée de 2 %.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | M.E. SCHULZ: "Quark Spezialitäten Lexikon - Encyclopedia of quark specialities", 1985, pages 96,224,226,253,72,73,101,239,259, VV GmbH - Volkswirtschaftlicher Verlag, Munich, DE;<br>* Page 96 "Quark-Gurkengerichte"; page 101 "Qaurkheringssalat mit süss-sauren Gurken"; page 224 "Quark-Rettich-Mischungen"; page 226 "Quark-Rohkost"; page 239 "Quark-Sauerkraut"; page 253 "Quark-Sellerie Speisen"; page 259 "Würzmittel für pikante Quarkspeisen"; pages 72,73 "Quark-Fleischgerichte" * | 1,3 | A 23 C   19/076 |
| | --- | | |
| X | E. CAMPBELL: "Encyclopedia of World Cookery", 1958, Spring Books, Feltham, GB;<br>* Page 320 "Cream cheese spread" * | 1 | **DOMAINES TECHNIQUES RECHERCHES (Int. Cl.4)**<br><br>A 23 C |
| | --- | | |
| A | DE-A-2 756 679   (W. MUNK)<br>* Revendications 1-4; pages 3,4, exemples * | 1-6 | |
| | --- | | |
| A | DE-A-3 213 130   (N. FOSTIERIS)<br>* Revendications 1-9 * | 1-6 | |
| | ---                        -/- | | |

Le présent rapport de recherche a été établi pour toutes les revendications

| Lieu de la recherche | Date d'achèvement de la recherche | Examinateur |
|---|---|---|
| LA HAYE | 21-01-1987 | DESMEDT G.R.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## DOCUMENTS CONSIDERES COMME PERTINENTS

Page 2

| Catégorie | Citation du document avec indication. en cas de besoin. des parties pertinentes | Revendication concernée | CLASSEMENT DE LA DEMANDE (Int Cl.4) |
|---|---|---|---|
| A | DE-A-3 226 756 (N. KONTOPOULOS)<br>* Revendications 1,2 * | 1,3 | |
| | ----- | | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 21-01-1987 | DESMEDT G.R.A. |